Europäisches Patentamt

European Patent Office

Office européen des brevets

(19)

(11) Numéro de publication : **0 454 538 A1**

# (12) DEMANDE DE BREVET EUROPEEN

(21) Numéro de dépôt : **91401000.4**

(22) Date de dépôt : **16.04.91**

(51) Int. Cl.$^5$ : **H04N 9/30, H04N 9/12, G09G 3/36**

(30) Priorité : **27.04.90 FR 9005397**

(43) Date de publication de la demande :
**30.10.91 Bulletin 91/44**

(84) Etats contractants désignés :
**DE FR GB NL**

(71) Demandeur : **THOMSON-LCD**
**51, Esplanade du Géneral de Gaulle**
**F-92800 Puteaux (FR)**

(72) Inventeur : **Mourey, Bruno**
**THOMSON-CSF, SCPI, CEDEX 67**
**F-92045 Paris la Defense (FR)**
Inventeur : **Hepp, Bernard**
**THOMSON-CSF, SCPI, CEDEX 67**
**F-92045 Paris la Defense (FR)**

(74) Mandataire : **Chaverneff, Vladimir et al**
**THOMSON-CSF SCPI**
**F-92045 PARIS LA DEFENSE CEDEX 67 (FR)**

(54) **Ecran matriciel couleurs à adressage entrelacé.**

(57)  L'écran de l'invention comporte des quadruplets de filtres (R,V,V,B), l'adressage se faisant par paires de lignes (L1 et L3, L5 et L7, ... et : L2 et L4, L6 et L8, ...) avec décalage d'une ligne d'une trame à la suivante (L3 et L5, L7 et L9, ... et : L4 et L6, L8 et L10, ...).

EP 0 454 538 A1

La présente invention se rapporte à un écran matriciel couleurs à adressage entrelacé.

Les écrans matriciels à cristaux liquides doivent, pour fonctionner correctement, être rafraîchis le plus fréquemment possible (au moins toutes les 20 ms), et la polarité de chacune des différentes cellules de la matrice doit également être alternée fréquemment.

Ces exigences peuvent être satisfaites avec des écrans à simple définition (280 lignes), mais si l'on veut doubler la définition (575 lignes), les techniques habituelles d'adressage ne sont pas satisfaisantes. En effet, une technique connue consiste à appliquer une polarité positive pendant une trame paire et une trame impaire (les lignes impaires étant adressées pendant la trame paire par exemple, et les lignes paires pendant la trame impaire), puis à appliquer une polarité négative pendant une deuxième trame paire et une deuxième trame impaire, et ainsi de suite. La fréquence de rafraîchissement serait alors de 12, 5 Hz, ce qui conduirait à un papillotement inadmissible.

Une autre technique connue consiste à adresser les lignes successivement les unes après les autres (par exemple les lignes 1, 2, 3 et 4, . . . ) , et ce, en alternant la polarité toutes les trames. Ainsi, chaque ligne est rafraîchie toutes les 20 ms, mais ce procédé complique l'adressage des lignes et ne peut être mis en oeuvre qu'avec des écrans dans lesquels on utilise une mémoire d'image afin de pouvoir adresser progressivement toutes les lignes de l'écran.

La présente invention a pour objet un écran matriciel à définition améliorée qui ne nécessite pas de mémoire d'image et ne présente pas de papillotement.

L'écran matriciel conforme à l'invention du type à adressage entrelacé, est tel que deux lignes de même parité sont adressées en même temps, avec décalage d'une ligne d'une trame à la suivante. Selon un aspect de l'invention, l'écran comporte des quadruplets de filtres colorés et pour une première trame on adresse successivement des couples de lignes $L_{4n+1}$ et $L_{4n+3}$, puis $L_{4n+2}$ et $L_{4n+4}$ en synchronisme avec les lignes, de même parité que la trame, du signal vidéo, et pour la trame suivante : $L_{4n-1}$ et $L_{4n+1}$, puis $L_{4n}$ et $L_{4n+2}$ en synchronisme avec les lignes, de même parité que la trame suivante, du signal vidéo.

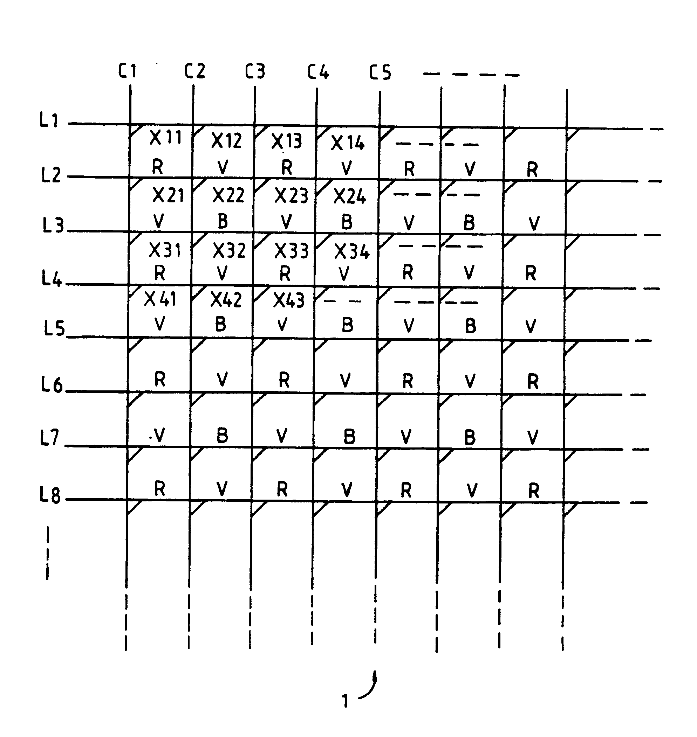

L'invention sera mieux comprise à la lecture de la description détaillée d'un mode de réalisation, pris à titre d'exemple non limitatif, et illustré par le dessin annexé, dont la figure unique est une vue en plan simplifiée et partielle d'un écran matriciel en couleurs conforme à l'invention.

L'invention est expliquée ci-dessous en référence à un écran matriciel à cellules de cristaux liquides, mais il est bien entendu qu'elle peut être mise en oeuvre pour réaliser des écrans matriciels à cellules faisant appel à des technologies autres que les cristaux liquides.

L'écran 1 représenté sur le dessin comporte une matrice de conducteurs de lignes L1,L2,L3, ... et de conducteurs de colonnes C1, C2, C3, . . .

Chacune des "cases" délimitées par deux conducteurs de ligne voisins et deux conducteurs de colonne voisins comporte une cellule de cristal liquide. Ces cellules sont respectivement référencées X11, X12, X13, ... pour la première ligne de cellules (entre les conducteurs L1 et L2), X21,X22,X23, ... pour la deuxième ligne de cellules, et ainsi de suite.

La disposition des filtres colorés coopérant avec les cellules est en "quadruplets", c'est-à-dire que ces filtres sont groupés en carrés identiques comportant chacun quatre filtres. Dans le présent exemple, chaque quadruplet comprend, de gauche à droite et de haut en bas : un filtre rouge (R), un filtre vert (V), un filtre vert, et un filtre bleu (B). Ainsi, le premier quadruplet de l'écran 1 comprend les cellules X11, X12, X21, X22, auxquelles correspondent respectivement des filtres R,V,V,B. Chaque cellule est commandée par un transistor relié à la ligne et à la colonne correspondantes. Les transistors sont symbolisés par des traits joignant, près de chaque croisement considéré, une ligne et une colonne. Les échantillons successifs d'une ligne de signal vidéo sont envoyés aux conducteurs de colonnes C1, C2, ... L'adressage des lignes se fait de la manière suivante :

Pour une première trame (par exemple une trame paire), on adresse successivement les couples de lignes $L_{4n+1}$ et $L_{4n+3}$ puis $L_{4n+2}$ et $L_{4n+4}$, en synchronisme avec les lignes paires du signal vidéo et pour la trame suivante : $L_{4n-1}$ et $L_{4n+1}$, puis $L_{4n}$ et $L_{4n+2}$, en synchronisme avec les lignes impaires du signal vidéo, avec n variant de 0 à sa valeur maximale. Ainsi, par exemple, pour une première trame, on adresse simultanément deux lignes impaires successives : L1 et L3, puis des lignes successives paires L2 et L4, ensuite les deux lignes impaires L5 et L7, puis les deux lignes paires L6 et L8, en synchronisme avec les lignes paires du signal vidéo.

A la trame suivante (impaire pour l'exemple précité), on décale d'une ligne d'adressage, tout en gardant le même procédé d'adressage de deux lignes successives de même parité : L1 ( toute seule ), L2 ( toute seule ), L3 et L5, puis L4 et L6, L7 et L9, L8 et L10, ... d'autre part, en synchronisme avec les lignes impaires du signal vidéo, et ainsi de suite. Bien entendu, à la troisième trame, on revient au même adressage que pour la première trame. Bien entendu, dans ce cas, lorsque n=0, les lignes $L_{-1}$ et $L_0$ n'existent pas, on adresse $L_1$ toute seule puis $L_2$ toute seule.

Bien entendu, un tel adressage n'est possible que parce que la disposition des filtres colorés est la même pour tous les quadruplets. En effet, on voit que pour chaque colonne de cellules, la même couleur de filtre se retrouve pour toutes les lignes impaires d'une part (par exemple, pour la première colonne commandée par C1 : les lignes L1 et L3 commandent deux cellules X11,X31 à filtres R), et pour toutes les lignes paires d'autre part ( pour la colonne commandée par C1, les lignes L2 et L4 commandent deux cellules X21,X41 à filtres V).

En envoyant simultanément le même signal vidéo sur deux lignes distinctes, on diminue le papillotement, sans avoir besoin d'utiliser de mémoire d'image.

## Revendications

1. Ecran matriciel couleurs à adressage entrelacé, caractérisé par le fait qu'il comporte des quadruplets de filtres colorés et que pour une première trame on adresse successivement des couples de lignes $L_{4n+1}$ et $L_{4n+3}$, puis $L_{4n+2}$ et $L_{4n+4}$ en synchronisme avec les lignes, de même parité que la trame, du signal vidéo, et pour la trame suivante : $L_{4n-1}$ et $L_{4n+1}$, puis $L_{4n}$ et $L_{4n+2}$ en synchronisme avec les lignes, de même parité que la trame suivante, du signal vidéo.

2. Ecran selon la revendication 1, caractérisé par le fait que les quadruplets de filtres colorés comportent la séquence de filtres Rouge, Vert, Vert, Bleu.

3. Ecran selon la revendication 1 ou 2, caractérisé par le fait qu'il comporte des cellules à cristaux liquides.

|    | C1  | C2  | C3  | C4  | C5  | — — | — — |
|----|-----|-----|-----|-----|-----|-----|-----|
| L1 |     |     |     |     |     |     |     |
|    | X11 R | X12 V | X13 R | X14 V | — — | — — R | V |
| L2 |     |     |     |     | R | V | R |
|    | X21 V | X22 B | X23 V | X24 B | — — | — — V | B |
| L3 |     |     |     |     | V | B | V |
|    | X31 R | X32 V | X33 R | X34 V | — — | — — R | V |
| L4 |     |     |     |     | R | V | R |
|    | X41 V | X42 B | X43 V | — — | — — | — — V | B |
| L5 |     |     |     | B | V | B | V |
| L6 | R | V | R | V | R | V | R |
| L7 | ·V | B | V | B | V | B | V |
| L8 | R | V | R | V | R | V | R |

1

5

Office européen
des brevets

# RAPPORT DE RECHERCHE EUROPEENNE

Numero de la demande

EP 91 40 1000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 652 912 (MASUBUCHI) <br> * Colonne 1, lignes 21-26; colonne 2, ligne 66 - colonne 3, ligne 44; figure 3b * <br> --- | 1-3 | H 04 N 9/30 <br> H 04 N 9/12 <br> G 09 G 3/36 |
| A | EP-A-0 030 159 (MITSUBISHI DENKI K.K.) <br> * Page 11, ligne 16 - page 12, ligne 2 * <br> --- | 1-2 | |
| A | PATENT ABSTRACTS OF JAPAN, vol. 12, no. 108 (E-597)[2955], 7 avril 1988; & JP-A-62 236 281 (SANYO ELECTRIC CO., LTD) 16-10-1987 <br> ----- | 1 | |

|  |  |  | DOMAINES TECHNIQUES RECHERCHES (Int. Cl.5) |
|---|---|---|---|
|  |  |  | H 04 N <br> G 09 G |

Le présent rapport a été établi pour toutes les revendications

| Lieu de la recherche | Date d'achèvement de la recherche | Examinateur |
|---|---|---|
| LA HAYE | 01-04-1991 | PIGNIEZ T.J.P. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ......................................................................
& : membre de la même famille, document correspondant

EPO FORM 1503 03.82 (P0402)